# NEUE EUROPÄISCHE PATENTSCHRIFT

(11) **EP 2 493 951 B2**
(45) Veröffentlichungstag und Bekanntmachung des Hinweises auf die Entscheidung über den Einspruch: **18.08.2021**
(45) Hinweis auf die Patenterteilung: 11.07.2018
(21) Anmeldenummer: 10747632.7
(22) Anmeldetag: 31.08.2010
(51) Int. Cl.: C08G 18/48, C08G 18/66, C08G 18/76, C08K 5/10, C09J 175/04

(54) **PU-KLEBSTOFF MIT VISKOSITÄTSREGLER**
PU ADHESIVE HAVING VISCOSITY REGULATOR
ADHÉSIF POLYURÉTHANE CONTENANT UN RÉGULATEUR DE VISCOSITÉ

(30) Priorität: 27.10.2009 DE 102009046050
(43) Veröffentlichungstag der Anmeldung: 05.09.2012
(73) Patentinhaber: Henkel AG & Co. KGaA, 40589 Düsseldorf (DE)
(72) Erfinder: THIELE, Lothar, 40764 Langenfeld (DE); MATUSIK, Patrik, 40468 Düsseldorf (DE); BRENGER, Andreas, 40221 Düsseldorf (DE); PÖLITZ, Silvana, 40699 Erkrath (DE)
(86) Internationale Anmeldenummer: PCT/EP2010/062686
(87) Internationale Veröffentlichungsnummer: WO 2011/051019

(56) Entgegenhaltungen:
- EP-A1- 0 464 483
- WO-A1-03/076545
- DE-A1-102008 025 793
- US-A1- 2005 010 013

## Beschreibung

Die Erfindung betrifft flüssige reaktive Klebstoffe auf Basis von Polyurethanprepolymeren mit einem geringen Gehalt an monomeren Isocyanaten, die eine die Viskosität absenkende Substanz enthalten. Diese Prepolymere können als 1 Komponenten- oder 2Komponenten-Klebstoff formuliert werden.

Aus der DE 19957351 sind Klebstoffe bekannt auf Basis monomerarmer PU-Prepolymere, die durch Umsetzung von niedermolekularen Diolen mit Diisocyanaten hergestellt werden, die anschließend von monomeren Diisocyanaten befreit werden. Die NCO-Gruppen-haltigen Prepolymere werden anschließend mit Diolen umgesetzt, und es werden reaktive Polymere als Schmelzklebstoffe erhalten. Die Schmelzviskosität der Klebstoffe liegt über 4,5 Pas bei 130°C, diese sind bei Raumtemperatur fest.

Aus der DE 10150722 sind feste Klebstoffzusammensetzungen bekannt, die aus 2,4'-Diphenylmethandiisocyanat hergestellt werden, wobei diese Isocyanate mit niedermolekularen Polyolen umgesetzt werden. Dabei soll nur ein geringer Teil an Restmonomeren im Klebstoff enthalten sein. Bei Raumtemperatur flüssige Klebstoffe sind nicht beschrieben.

WO 03/076545 betrifft eine Flockklebstoffzusammensetzung, die Präpolymere mit Isocyanat-Endgruppen aufweisende Polyether- und/oder Polyalkadienpolyolen mit niedrigem Molekulargewicht enthält.

US 2005/0010013 offenbart feuchtigkeitsaktivierte Polyisocyanat-Klebstoffe, die isocyanat-terminierte Präpolymere aufweisen und können bei niedrigen Temperaturen ausgehärtet werden.

Reaktive feuchtigkeitshärtende Polyurethan-Kleb-/Dichtstoffe enthalten Polymere mit Urethangruppen, ggf. Harnstoffgruppen und reaktiven Isocyanatgruppen. Für viele Anwendungsfälle sind diese Zusammensetzungen wegen der enthaltenen Harnstoff- und Urethangruppen lösungsmittelhaltig, sehr hochviskos oder pastös. Sie werden deshalb bei erhöhter Temperatur zwischen etwa 50°C und etwa 100°C verarbeitet, oder bei Raumtemperatur und es werden dann organische Lösemittel zugesetzt.
Um die Viskosität solcher Prepolymere mit nur mit einem geringen Gehalt an monomeren Diisocyanaten zu vermindern, sind üblicherweise niedermolekulare Verbindungen enthalten. Es kann sich dabei um zugesetzte flüssige Isocyanatumsetzungsprodukte handeln, beispielsweise um Isocyanate mit Carbodiimiden. Es können auch inerte Lösemittel hinzugegeben werden, z.B. Kohlenwasserstoffe oder Weichmacher. Es ist ebenfalls bekannt, dass flüssige silanhaltige Verbindungen zugesetzt werden können. Solche Zusätze, die notwendig sind, um bei Raumtemperatur eine geeignete Applikationsviskosität der Klebstoffe zu erhalten, haben verschiedene Nachteile. Beispielsweise sind organische Lösemittel in der technischen Anwendung häufig unerwünscht. Diese flüchtigen Verbindungen sind oft gesundheitlich bedenklich. Außerdem müssen Lösemittel vor dem Zusammenfügen der Substrate verdampfen, was eine Applikation in dicken Schichten erschwert, oder es werden lange Verklebungszeiten erhalten. Außerdem haben viele Lösemittel den Nachteil, bei der Verklebung von Kunststoffsubstraten diese anzulösen und so an der Oberfläche zu zerstören. Werden bekannte Weichmacher zugegeben, so können diese in der Klebefuge migrieren und ggf. die Haftung beeinträchtigen. Das Zusetzen von Silanverbindungen kann zu einer Beeinträchtigung der Isocyanatreaktion führen, da bei Hydrolyse der Silanverbindungen monofunktionelle Alkohole entstehen.

Trotz des vorgenannten Standes der Technik besteht also weiterhin Bedarf an verbesserten Polyurethan-Zusammensetzungen mit einem niedrigen Anteil an monomeren Diisocyanaten, deren Viskosität einen Einsatz bei Raumtemperatur zulässt. Sie sollen eine gute Haftung zu verschiedenen Oberflächen aufweisen.

Dabei sollen mögliche, die Haftung beeinträchtigende migrierende Bestandteile, vermieden werden, weiterhin sollen Kunststoffsubstratoberflächen nicht angegriffen werden.

Die Aufgabe wird gelöst durch die Bereitstellung eines monomerarmen vernetzbaren 1-Komponenten oder 2-Komponenten Polyurethanklebstoffs gemäß Anspruch 1.

Das erfindungsgemäß geeignete PU-Prepolymer ist ein an sich bekanntes Umsetzungsprodukt aus Polyolen und Polyisocyanaten, das nur einen geringen Anteil an monomeren, nicht umgesetzten Diisocyanaten enthält. Es kann durch Umsetzung von Diisocyanaten mit Polyolen erhalten werden.

Als Polyole für die Synthese des PU-Prepolymeren können dabei Polyhydroxyverbindungen eingesetzt werden, ausgewählt aus Polyetherpolyolen oder Polyesterpolyolen. Als Polyole eignen sich vorzugsweise Polyhydroxyverbindungen mit zwei bzw. drei Hydroxylgruppen pro Molekül im Molekulargewichts-Bereich von 200 bis 3000 g/mol, vorzugsweise im Bereich von 400 bis 2000 g/mol.

Beispiele sind di- und/oder trifunktionelle Polypropylenglycole oder Polyethylenglycole, es können auch statistische und/oder Blockcopolymere des Ethylenoxids und Propylenoxids eingesetzt werden. Eine weitere Gruppe von einzusetzenden Polyethern sind die Polytetramethylenglycole (Poly(oxytetramethylen)glycol, Poly-THF), die z.B. durch die saure Polymerisation von Tetrahydrofuran hergestellt werden.

Weiterhin sind als Polyole solche Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können. Eine weitere Gruppe der erfindungsgemäß einzusetzenden Polyole sind die Polyester auf der Basis von ε-Caprolacton, auch Polycaprolactone genannt. Dabei soll das Molekulargewicht solcher Polyesterpolyole unter 2000 g/mol betragen.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Es kann sich dabei beispielsweise um Ricinusöl handeln.

Weitere geeignete Polyole sind Polycarbonat-Polyole, Polycaprolactondiole, Dimerdiole oder Hydroxy-funktionellen Polybutadiene. Diese können ggf anteilsweise in der Polyolmischung enthalten sein.

Es können auch aliphatische Alkylendiole enthalten sein. Es kann sich dabei um lineare oder verzweigte C₂ bis C₂₄ Diole handeln, die endständig oder lateral in der Kohlenstoffkette OH-Gruppen aufweisen. Beispiele sind Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höherfunktionelle Alkohole wie beispielsweise Glycerin, Trimethylolpropan, Pentaerythrit oder Zuckeralkohole. Solche höherfunktionellen Polyole sind aber weniger bevorzugt und sollen nur in Anteilen in den Polyolen enthalten sein.

Die Polyole sollen bevorzugt flüssig sein. Das Molekulargewicht soll bevorzugt unter 2000 g/mol betragen insbesondere unter 1500 g/mol (zahlenmittleres Molekulargewicht, MN, wie durch GPC bestimmbar). Dabei ist es bevorzugt, wenn Diole eingesetzt werden oder Mischungen derselben. Eine besondere Ausführungsform setzt Polyetherdiole ein, eine andere Ausführungsform Ricinusöl, es können auch Mischungen eingesetzt werden.

Monomere Diisocyanate, die für die Herstellung der Prepolymere geeignet sind, sind solche aromatischen, aliphatischen oder cycloaliphatischen Di- oder Triisocyanate, deren Molekulargewicht kleiner als 500 g/mol ist. Beispiele für geeignete aromatische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-4,4'-diisocyanat (MDI), Diphenylmethan-2,4'-diisocyanat sowie Mischungen des 4,4'-Diphenyl-methandiisocyanats mit dem 2,4'-Isomeren, Xylylen-diisocyanat (XDI), 4,4'-Di-phenyl-dimethylmethandiisocyanat, Di- und Tetraalkyl-diphenylmethan-diisocyanat, 4,4'-Dibenzyldiisocyanat, 1,3-Phenylendiisocyanat, 1,4-Phenylen-diisocyanat. Beispiele für geeignete cycloaliphatische Diisocyanate sind die Hydrierungsprodukte der vorgenannten aromatischen Diisocyanate wie z.B. das 4,4'-Dicyclohexylmethandiisocyanat (H12MDI), 1-Isocyanatomethyl-3-isocyanato-1,5,5-trimethyl-cyclohexan (Isophorondiisocyanat, IPDI), Cyclohexan-1,4-diisocyanat, hydriertes Xylylen-diisocyanat (H6XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Diisocyanate sind Tetramethoxybutan-1,4-diisocyanat, Butan-1,4-diisocyanat, Hexan-1,6-diisocyanat (HDI), 1,6-Diiso-cyanato-2,2,4-trimethylhexan, 1,6-Diisocyanato-2,4,4-trimethylhexan, Lysindiisocyanat sowie 1,12-Dodecandiisocyanat (C12DI).

Eine Ausführungsform setzt Isocyanate ein, die Isocyanatgruppen unterschiedlicher Reaktivität aufweisen. Beispiele dafür sind die Isomeren des Toluylendiisocyanats (TDI), Naphthalin-1,4-diisocyanat (NDI), Diphenylmethan-2,4'-diisocyanat (MDI), Isophorondiisocyanat (IPDI) oder hydriertes 2,4'-MDI. Bevorzugt wird ein aromatisches Isocyanat eingesetzt.

Die Umsetzung der monomeren Diisocyanate mit den Polyolen erfolgt dabei in an sich bekannter Weise, gegebenenfalls unter Zusatz von aprotischen Lösungsmitteln. Um die Bildung höherer Oligomere zu vermeiden, ist es vorteilhaft ein Überschuss an Diisocyanaten im Verhältnis zu den Diolen einzusetzen. Die Bildung von höher molekularen Prepolymeren soll weitgehend vermieden werden. Es ist zweckmäßig nur ein Diisocyanat einzusetzen.

In einer Ausführungsform kann nach Abschluss der Reaktion das Umsetzungsprodukt möglichst weitgehend von monomerem Diisocyanat befreit werden. Der Reinigungsschritt kann nach an sich bekannten Verfahren erfolgen. Beispielsweise kann das monomere Isocyanat durch selektive Extraktion, beispielsweise unter Verwendung von überkritischem Kohlendioxid oder anderen überkritischen aprotischen Lösemitteln, entfernt werden. Bevorzugt kann bei der Verwendung von monomeren Diisocyanaten, wie TDI, IPDI, MDI, das überschüssige monomere Diisocyanat destillativ aus dem Reaktionsgemisch entfernt werden. Hierzu erfolgt die Destillation vorzugsweise im Vakuum mit Hilfe eines Dünnschichtverdampfers oder eines Dünnfilmverdampfers. Derartige Destillationsverfahren sind in der Literatur beschrieben. In einer weiteren bevorzugten Ausführungsform wird das PU-Prepolymer durch Auswahl der Ausgangsmaterialien, beispielsweise durch asymmetrische Isocyanate, so hergestellt, dass nur geringe Anteile von monomeren Isocyanaten enthalten sind.

Die erhaltenen PU-Prepolymere mit NCO-Gruppen sollen maximal 0,5 Gew.-% monomeres Diisocyanat, bezogen auf das Prepolymer, enthalten, insbesondere weniger als 0,2 Gew.-%. Die entstehenden monomerarmen Prepolymere sind im lösemittelfreien Zustand hochviskos, beispielsweise mit einer Viskosität von 10000 bis 400000 mPas (gemessen bei 50°C) Brookfield-Viskosimeter, nach EN ISO 2555, bei angegebener Temperatur) oder sie besitzen eine niedrige Schmelztemperatur, beispielsweise unterhalb von 80°C. Bevorzugt sind solche Prepolymere bei Raumtemperatur noch fließfähig.

Es ist erfindungsgemäß notwendig, dass die erfindungsgemäßen PU-Klebstoffe einen Anteil von 0,5 bis 30 Gew.-% an Estern von gesättigten aliphatischen oder cycloaliphatischen mono- Carbonsäuren enthalten. Diese müssen mit dem Prepolymer verträglich sein. Es handelt sich dabei um C2 bis C24- mono-Carbonsäureester. Die Alkoholkomponente wird aus einwertigen Alkoholen mit 1 bis 12 C-Atomen ausgewählt. Dabei muss die Summe aller C-Atome der Ester mindestens 8 betragen.

Bei den erfindungsgemäß enthaltenen Estern handelt es sich um solche, die einen Siedepunkt oberhalb von 160°C aufweisen, bevorzugt über 200°C, insbesondere oberhalb von 250°C. Es handelt sich dabei um Ester von gesättigten aliphatischen oder cycloaliphatischer mono-Carbonsäuren. Eine besondere Ausführungsform verwendet aliphatische gesättigte mono-Carbonsäureester aus C6 bis C24-Carbonsäuren, insbesondere aliphatische lineare oder verzweigte mono-Carbonsäuren mit 10 bis 22 C-Atomen.

Die Carbonsäureester sollen bei 25°C eine Viskosität unter 1000 mPas aufweisen, bevorzugt unter 200 mPas, insbesondere unter 100 mPas. Die Menge der Ester wird so gewählt, dass die Viskosität der Prepolymere erniedrigt wird. Insbesondere soll die Viskosität der Mischung aus Prepolymer und Carbonsäureester unterhalb von 75000 mPas (gemessen bei 25°C) liegen, insbesondere unter 50000 mPas.

Die erfindungsgemäßen Polyurethan-Klebstoffe können weiterhin Hilfsstoffe enthalten. Darunter werden Stoffe verstanden, die in der Regel zugesetzt werden, um die Eigenschaften des Klebstoffs zu verändern, z.B. deren Verarbeitbarkeit, Lagerfähigkeit und auch Gebrauchseigenschaften dem konkreten Anwendungsgebiet anzupassen. Beispiele dafür sind fein verteilte Füllstoffe, Thixotropiermittel, Katalysatoren, Harze, Alterungsschutzmittel, Stabilisatoren, Farbstoffe, Haftvermittler oder Netzmittel.

Als Füllstoffe geeignet sind gegenüber Isocyanaten nicht reaktive anorganische Verbindungen wie Kreide, beschichtete Kreide, Kalkmehl, Calcium-Magnesium-Carbonate, Aluminiumoxide, gefällte Kieselsäure, Zeolithe, Bentonite, Glas, Hohlkugeln, gemahlene Mineralien, Farbpigmente soweit diese als Pulver vorliegen, d.h. eine Korngröße zwischen 1 bis 200 µm aufweisen, insbesondere zwischen 3 bis 100 µm. Solche Füllstoffe liegen nach dem Mischen im PU-Klebstoff fein verteilt vor. Insbesondere soll die Menge weniger als 5 Gew.-% betragen oder auch frei von Füllstoffen sein,

Die erfindungsgemäßen Zusammensetzungen können ggf. zusätzlich Katalysatoren enthalten, die die Vernetzung des PU-Prepolymeren nach der Applikation beschleunigen. Als erfindungsgemäß einsetzbare Katalysatoren eignen sich z.B. die metallorganischen Verbindungen des Zinns, Eisens, Titans, Zirkons oder Wismuts, wie Zinn(II)salze von Carbonsäuren, Dialkyl-Zinn(IV)-Carboxylate, wie Dibutyl-, Dioctyl-zinndiacetat oder -dilaurat, gemischt- oder nichtgemischt-substituierte Titan- oder Zirkonalkoxide, wie Tetramethoxyzirkon, Tetraethoxyzirkon. Tetramethoxytitan, Tetraethoxytitan, Tetraallyloxytitan, Ti oder Zr-Chelatverbindungen, Eisen II oder Eisen III- Salze, wie Eisen(III)oleat, Eisen (III)2-ethylhexanoat oder Wismutcarboxylate. Zusätzlich geeignet sind auch aliphatische tertiäre Amine insbesondere bei cyclischer Struktur, beispielsweise Triethanolamin, Trimethanolamin, Diethanolhexylamin, Diaza-bicyclo-octan (DABCO), Triethylamin, Dimethylbenzylamin, Diazabicycloundecen (DBU) Dimorpholinodiethylether (DMDEE) oder Di-2,6-dimethylmorpholinoethylether. Die Katalysatoren können auch in oligomerisierter oder polymerisierter Form vorliegen, z.B. als N-methyliertes Polyethylenimin.

Als Stabilisatoren im Sinne dieser Erfindung sind einerseits Stabilisatoren zu verstehen, die eine Viskositätsstabilität des Polyurethanprepolymeren während der Herstellung, Lagerung bzw. Applikation bewirken, beispielsweise Carbonsäurechloride. Desweiteren sind als Stabilisatoren im Sinne dieser Erfindung Antioxidantien, UV-Stabilisatoren oder Hydrolyse-Stabilisatoren zu verstehen. Wenn das Polyurethanprepolymer überwiegend aus Polyetherbausteinen aufgebaut ist, sind hauptsächlich Antioxidantien, ggf. in Kombination mit UV-Schutzmitteln, notwendig. Bestehen wesentliche Bestandteile des Polyurethanprepolymers aus Polyesterbausteinen, werden vorzugsweise Hydrolyse-Stabilisatoren, z.B. vom Carbodiimid-Typ, eingesetzt.

Der erfindungsgemäße Klebstoff kann auch Haftvermittler enthalten. Es kann sich dabei um reaktive Substanzen handeln, die mit der Substratoberfläche eine Reaktion eingehen können. Als Haftvermittler werden vorzugsweise organofunktionelle Silane wie hydroxyfunktionelle, (meth)acryloxyfunktionelle, mercaptofunktionelle, aminofunktionelle oder epoxyfunktionelle Silane verwendet. Solche Verbindungen sind dem Fachmann bekannt.

Der Klebstoff kann zusätzlich ein Harz enthalten. Dabei handelt es sich um flüssige bis feste organische Produkte, für die eine mehr oder weniger breite Verteilung der relativen Molmasse charakteristisch ist. Sie weisen meistens eine amorphe Struktur auf. Es können die bekannten Harze verwendet werden, seien sie natürlichen oder synthetischen Ursprungs. Die natürlichen Harze können sowohl pflanzlicher als auch tierischer Herkunft sein. Beispiele dafür sind Schellack und Kolophoniumharze, wie Tallharz, Balsamharz oder Wurzelharz. Nicht nur die natürlichen Harze, sondern auch deren Derivate sind geeignet, wie dimerisierte, hydrierte, veresterte oder neutralisierte Harze. Beispiele dafür sind Harnstoff-, Melamin-, Kohlenwasserstoff-, Terpen-, Cumaron/Inden-, Furan-, Aldehyd-, Keton-, Keton-/Aldehyd-, Phenol-, Alkyd-, Glycerinester-, Polyester-, Epoxid-, Polyamid- und Isocyanat-Harze. Diese Harze können mit Isocyanaten reaktive Gruppen enthalten, oder sie weisen keine solchen Gruppen auf.

Aus den PU-Prepolymeren können Klebstoffe formuliert werden. Dabei ist es möglich, 1K-PU-Klebstoffe herzustellen, wobei diese dann 95,5 bis 70 Gew.-% von erfindungsgemäßen geeigneten NCO-Gruppen-haltigen PU-Prepolymeren enthalten, sowie 0,5 bis 30 Gew.-% erfindungsgemäßen Carbonsäureester. Gegebenenfalls können in diesen 1K-PU-Klebstoffen noch bis zu 25 Gew.-% Additive und Hilfsstoffe enthalten sein. Insbesondere ist es zweckmäßig, wenn 0,01 bis 2 Gew.-% Katalysatoren enthalten sind. Die Summe der Bestandteile soll 100 % ergeben. Diese erfindungsgemäßen Klebstoffe enthalten dabei nur geringe Mengen an monomerarmen, nicht umgesetzten Isocyanaten, beispielsweise weniger als 0,5 Gew.-% oder weniger als 0,1. Gew.-%.

Der erfindungsgemäße PU-Klebstoff kann verschiedene Hilfsstoffe und Additive aufweisen. Insbesondere ist es zweckmäßig, wenn die Mischung frei von anderen organischen Lösemitteln ist, die einen Siedepunkt von unterhalb von 160 oder 200°C aufweisen. Ebenso hat es sich als zweckmäßig erwiesen, wenn keine weiteren Weichmacher wie naphthenische Mineralöle, paraffinische Kohlenwasserstoffe oder ähnliche niedermolekulare Produkte enthalten sind.

Die einzusetzenden Additive können mit dem Prepolymeren gemischt werden, soweit sie keine mit NCO-Gruppen reaktive Gruppen aufweisen, insbesondere auch keine Feuchtigkeit enthalten.

Die erfindungsgemäßen 1K-PU-Klebstoffe sind lagerstabil. Durch Auswahl der Polymeren und der Additive wird sichergestellt, dass keine vorzeitige Reaktion der NCO-Gruppen mit weiteren Bestandteilen erfolgen kann.

Weiterhin können aus den erfindungsgemäß geeigneten PU-Prepolymeren mit NCO-Gruppen zusammen mit einer OH-haltigen Komponente auch 2K-PU-Klebstoffe formuliert werden. Dabei können gegebenenfalls bis zu 25 Gew.-% Additive und Hilfsstoffe in der NCO-reaktiven PU-Prepolymerkomponente enthalten sein, insbesondere werden diese aber der OH-Gruppen-haltigen Komponente zugesetzt. Die Menge der OH-Gruppen-haltigen Komponente wird so gewählt, dass ein NCO:OH-Verhältnis erhalten wird, das einen geringen Überschuss an Isocyanatgruppen aufweist. Beispielsweise soll das NCO:OH-Verhältnis von 1,2 bis 2:1, insbesondere von 1,05 bis 1,5:1 betragen. Diese zwei Komponenten werden bis zur Anwendung getrennt gelagert und unmittelbar vor Anwendung gemischt und dann als Klebstoff eingesetzt.
Als OH-Gruppen-haltige Komponente können flüssige Polyole mit einer Funktionalität von 2 bis 5 ausgewählt werden. Es kann sich um einen oder mehrere der oben aufgeführten Polyole handeln. Dabei kann das Molekulargewicht auch höher liegen, es kann beispielsweise bis 10000 g/mol betragen. Bevorzugt weisen diese Polyole eine Funktionalität über zwei auf und können die Vernetzungsdichte erhöhen. Ebenfalls können OH-Gruppen-haltige Harze in dieser Komponente enthalten sein. Die entsprechenden reaktiven Gruppen sind bei der Festlegung des Mischungsverhältnisses zu berücksichtigen.
Die erfindungsgemäß geeigneten monomerarmen Prepolymere besitzen eine hohe Viskosität. Diese sind zu einer direkten Applikation als Klebstoff weniger geeignet. Die Viskosität eines erfindungsgemäßen 1K-Klebstoffs soll zwischen 1000 bis 75000 mPas betragen, bevorzugt bis zu 50000 mPas, insbesondere unterhalb von 40 000 mPas, gemessen bei Applikationstemperatur. Diese soll insbesondere zwischen 15 und 50°C liegen, insbesondere soll diese Viskosität bei Raumtemperatur (20 bis 30 °C) vorliegen. Durch die niedrige Viskosität ist eine direkte Applikation als 1K-PU-Klebstoff möglich. Gegebenenfalls kann zusätzlich der Klebstoff erwärmt werden auf Temperaturen bis zu 50°C, dabei kann dann die Viskosität auf weniger als 10 000 mPas bei Applikationstemperatur abgesenkt werden.

Auch als 2K-Klebstoff sind monomerarme Prepolymere ohne Carbonsäureester ungeeignet, da eine Mischung mit einer zweiten Komponente bei Umgebungstemperatur schwierig ist und einen erheblichen Geräteaufwand erfordert. Erfindungsgemäß können aber 2K-PU-Klebstoffe bereitgestellt werden, die in einer Komponente eine Mischung aus PU-Prepolymer und Carbonsäureester enthalten. Dabei kann diese NCO-reaktive Komponente analog dem oben beschriebenen 1K-Klebstoff aufgebaut sein und ähnliche Eigenschaften aufweisen.

In diesem Fall wird eine Mischung mit einer zweiten Komponente erleichtert. Es ist dem Fachmann bekannt, dass Flüssigkeiten ähnlicher Viskosität besonders einfach und anwendungssicher zu vermischen sind. Die erfindungsgemäßen PU-Klebstoffe können auf verschiedene Substrate aufgetragen werden. Durch die niedrige Viskosität können sie bei Raumtemperatur verarbeitet werden. Sie fließen gut an das Substrat an und können in dünner Schicht appliziert werden. Die Klebstoffe vernetzen durch Luftfeuchtigkeit oder durch die OH-Gruppen-haltige zweite Komponente. Dabei kann die Vernetzung durch erhöhte Temperatur beschleunigt werden.

Als Substrate sind die bekannten Substrate aus Holz, Kunststoff, Metall, Keramik oder Stein geeignet. Dabei soll die Oberfläche von anhaftenden losen Staubteilchen gereinigt werden, danach kann der Klebstoff aufgetragen werden und das zweite Substrat auf das erste Substrat gebracht werden. Je nach Dauer der Reaktionszeit ist es zweckmäßig, ggf. beide Substrate gegeneinander zu fixieren. Die verklebten Substrate zeigen eine stabile Verklebung miteinander. Die Haftung zu der Oberfläche ist gut, die Kohäsion innerhalb des Klebstoffs ist ebenfalls hervorragend. Eine Beeinträchtigung der Verklebung kann durch die ausgewählten Carbonsäureester vermieden werden. Eine Migration dieser Bestandteile ist auch nach Vernetzung nicht zu beobachten. Durch die Auswahl der Zusatzmittel auf Basis der Carbonsäureester können auch empfindliche Kunststoffsubstrate verklebt werden, ohne dass die Oberfläche durch Lösemittel geschädigt wird.

Ein weiterer Vorteil der erfindungsgemäßen Klebstoffe ist die gute Lagerstabilität. Dabei zeigt sich auch bei forcierter Lagerung nur ein geringer Anstieg der Viskosität. Die viskositätsvermindernden Zusatzmittel bleiben stabil im Klebstoff gemischt, eine Phasentrennung tritt nicht ein.

Die nachfolgenden Beispiele erläutern die Erfindung.

### Präpolymerherstellung :

### Prepo1:

Zur fünffachen Molmenge (2,4-TDI) wird die einfache Molmenge Polypropylenglycol 400 langsam zugegeben und nach Abklingen der exothermen Reaktion 2 Stunden auf 80°C erwärmt. Danach erfolgt Entfernung des überschüssigen Isocyanats mittels Dünnschichtverdampfung bei Drücken bis zu 0,07 mbar und Temperaturen zwischen 165 und 170°C. Der Gehalt an monomerem 2,4-TDI liegt dann unter 0,02 %, und die Viskosität beträgt 266 000 mPas bei 25 °C. Das Produkt wird mit 0,2 % Benzoylchlorid stabilisiert.

### Prepo2:

Analog werden Präpolymere mit Polypropylenglycol der mittleren Molmassen von 575 g/mol hergestellt. Dabei kommen Mischungen aus Polypropylenglycol 400 und 1000 zum Einsatz. Der Gehalt an freiem 2,4-TDI liegt unter 0,02 %, und die bei 25°C bestimmte Viskosität beträgt 133 000 mPas.

### Prepo3:

Analog werden Präpolymere mit Polypropylenglykol der mittleren Molmassen von 675 g/mol hergestellt. Dabei kommen Mischungen aus Polypropylenglycol 400 und 1000 zum Einsatz. Der Gehalt an freiem 2,4-TDI liegt unter 0,02 %, und die bei 25°C bestimmte Viskosität beträgt 74 000 mPas.

### Prepo4 :

Nach gleichem Versuchsschema wird auch (4,4'-MDI) mit Polypropylenglycol 750 umgesetzt. Die Dünnschichtverdampfung erfolgt bei gleichem Druck jedoch im Temperaturbereich um 200°C. Der Gehalt an freiem 4,4'-MDI liegt bei 0,08 %, die Viskosität bei 25°C bei 212 000 mPas.
Die Prepolymere sind hochviskos und ziehen bei der Verarbeitung Fäden.

### Vergleichsbeispiel 1

Das Prepo1 wird mit 15 % getrocknetem Leinöl verdünnt.
Die Viskosität liegt bei 25°C bei 42 400 mPas. Nach 7 Tagen Lagerung bei 40°C ist diese Viskosität auf 68 000 mPas angestiegen.
Von diesem 1-K-Klebstoff wird Styrofoam angegriffen.

Mit dem so hergestellten Produkt werden Prüfkörper aus Buchenholz verklebt, Die Zugscherfestigkeit liegt bei 12,5 MPa. (DIN 53504)

### Vergleichsbeispiel 2

Das Prepo1 wird mit 10 % getrocknetem Butylacetat verdünnt.
Ausgangsviskosität (25°C): 35 000 mPas
Viskosität (25°C) nach 7d bei 40°C: 63 000 mPas
Anlösen von Styrofoam
Zugscherfestigkeit Buche: 8,3 MPa

### Vergleichsbeispiel 3

Prepo4 wird mit 15 % getrocknetem Leinöl verdünnt.
Ausgangsviskosität (25°C): 45 250 mPas
Viskosität (25°C) nach 7d bei 40°C: 80 500 mPas
Zugscherfestigkeit Buche: 3,9 MPa
Anlösen von Styrofoam

### Beispiel 1

Es wird das Prepo3 mit 5 % getrocknetem Isobutylstearat verdünnt.
Ausgangsviskosität (25°C): 24 000 mPas
Viskosität (25°C) nach 7d bei 40°C: 28 000 mPas
Zugscherfestigkeit Buche: 5,3 MPa
Kein Anlösen von Styrofoam

### Beispiel 2

Es wird das Prepo 2 mit 6 % getrocknetem Methyllaurat verdünnt.
Ausgangsviskosität (25°C): 45 200 mPas
Viskosität (25°C) nach 7d bei 40°C: 48 300 mPas
Zugscherfestigkeit Buche: 8,7 MPa
Kein Anlösen von Styrofoam

### Beispiel 3

Es wird das Prepo 1 mit 5 % getrocknetem Methyllaurat verdünnt.
Ausgangsviskosität (25°C): 70 500 mPas
Viskosität (25°C) nach 7d bei 40°C: 71 800 mPas

Beispiel 3 als Komponente A wird gemischt mit Komponente OH-Komponente, bestehend aus einer Polyolmischung aus Rizinusöl (21,0 %), Polypropylenglykol 400 (5,2 %), trifunktionellem Polyetherpolyol auf Glyzerinbasis mit OH-Zahl 370,5 (7,0 %), sowie gecoatetem Calciumcarbonat (20,5 %), Calciummagnesiumcarbonat (41,5 %) und Molsieb A3 (4,8 %), Dibutylzinndilaurat (0,05%).
NCO:OH = 1,18 : 1.
Zugscherfestigkeit Aluminium: 7,7 MPa

### Beispiel 4

Es wird das Prepo 1 mit 5 % getrocknetem Isobutyllaurat verdünnt.
Ausgangsviskosität (25°C): 72 000 mPas
Viskosität (25°C) nach 7d bei 40°C: 73 200 mPas

Zu dieser Mischung werden gecoatetem Calciumcarbonat (6,5g), Aerosil R202 (0,5g) und Dimorpholinodiethylether (0,5g) gegeben.
NCO:OH = 1,18 : 1.
Zugscherfestigkeit Buche: 4,8 MPa

Die Beispiele 1 bis 4 sind gut zu verarbeiten und auf die Substrate aufzutragen.
Die Verklebungen sind stabil.
Die Lagerstabilität der Beispiele ist verbessert.

## Patentansprüche

1. Monomerarmer vernetzbarer 1-Komponenten oder 2-Komponenten Polyurethanklebstoff enthaltend ein Polyurethanprepolymer mit NCO-Gruppen mit einem Molekulargewicht (MN) von unter 5000 g/mol, bestimmt mittels GPC, mit einem Gehalt an monomeren Diisocyanaten unter 0,5 Gew.-%, wobei bezogen auf das PU-Prepolymer 0,5 bis 30 Gew.-% Ester von gesättigten oder ungesättigten aliphatischen oder cycloaliphatischen C₂ bis C₂₄ -Mono- oder Dicarbonsäuren mit einwertigen C₁ bis C₁₂-Alkoholen enthalten sind und der Ester mindestens insgesamt 8 C-Atome aufweist und einen Siedepunkt oberhalb von 160 °C aufweist, wobei es sich bei den Estern um Ester gesättigter aliphatischer oder cvcloaliphatischer C₂ bis C₂₄-Monocarbonsäuren mit einwertigen C₁ bis C₁₂-Alkoholen handelt und die Ester mindestens insgesamt 8 C-Atome und einen Siedepunkt oberhalb von 160 °C aufweisen.

2. PU-Klebstoff nach Anspruch 1, **dadurch gekennzeichnet, dass** er zusätzlich übliche Additive und Hilfsstoffe enthält, ausgewählt aus der Gruppe bestehend aus fein verteilten Füllstoffen, Thixotropiermitteln, Katalysatoren, Harzen, Alterungsschutzmitteln, Stabilisatoren, Farbstoffen, Haftvermittlern und Netzmitteln.

3. PU-Klebstoff nach einem der Ansprüche 1 oder 2, **dadurch gekennzeichnet, dass** als Ester aliphatische Carbonsäureester aus C₆ bis C₂₂-Carbonsäuren verwendet werden.

4. PU-Klebstoff nach einem der Ansprüche 1 bis 3, **dadurch gekennzeichnet, dass** das Prepolymer durch Umsetzung von zwei- oder drei-funktionellen Polyetherpolyolen oder Polyesterpolyolen mit einem Überschuss an Diisocyanaten hergestellt wird.

5. PU-Klebstoff nach einem der Ansprüche 1 bis 4, **dadurch gekennzeichnet, dass** als Isocyanat aromatische Diisocyanate eingesetzt werden, insbesondere TDI oder MDI und deren Isomere.

6. PU-Klebstoff nach einem der Ansprüche 1 bis 5, **dadurch gekennzeichnet, dass** als Polyol Polyethylenglykole oder Polypropylenglykole eingesetzt werden, insbesondere dass das Molekulargewicht der Polyole unter 1500 g/mol beträgt.

7. PU- Klebstoff nach einem der Ansprüche 1 bis 6, **dadurch gekennzeichnet, dass** 3 bis 15 % Gew. der Carbonsäureester eingesetzt werden.

8. PU-Klebstoff nach einem der Ansprüche 1 bis 7, **dadurch gekennzeichnet, dass** aliphatische Carbonsäuren mit 10 bis 22 C-Atomen als Ester eingesetzt werden.

9. PU-Klebstoff nach einem der Ansprüche 1 bis 8, **dadurch gekennzeichnet, dass** der Klebstoff einen Haftvermittler enthält, insbesondere auf Silanbasis.

10. PU-Klebstoff nach einem der Ansprüche 1 bis 9, **dadurch gekennzeichnet, dass** die Viskosität des Klebstoffs unter 75000 mPas (DIN ISO 2555, 25°C) beträgt.

11. PU-Klebstoff nach einem der Ansprüche 1 bis 10, **dadurch gekennzeichnet, dass** der Klebstoff frei von Füllstoffen und Pigmenten ist.

12. PU-Klebstoff nach einem der Ansprüche 1 bis 11, **dadurch gekennzeichnet, dass** der Klebstoff zusätzlich 0,1 bis 25 Gew.-% Additive enthält.

13. PU-Klebstoff nach einem der Ansprüche 1 bis 12, **dadurch gekennzeichnet, dass** der 2K-Klebstoff aus einer OH-funktionellen Komponente und einer NCOfunktionellen Komponente besteht, wobei die NCO-Komponente ein PU-Prepolymer zusammen mit entsprechenden Carbonsäureestern enthält.

## Claims

1. A low-monomer, crosslinkable one-component or two-component polyurethane adhesive containing a polyurethane prepolymer having NCO groups that have a molecular weight (MN) of less than 5,000 g/mol, determined by means of GPC, and having a monomeric diisocyanate content of less than 0.5 wt.%, wherein, based on the PU prepolymer, 0.5 to 30 wt.% of esters of saturated or unsaturated aliphatic or cycloaliphatic C₂ to C₂₄ mono- or dicarboxylic acids having monovalent C₁ to C₁₂ alcohols are contained, and the ester comprises at least a total of 8 C atoms and has a boiling point above 160 °C, wherein the esters are esters of saturated aliphatic or cycloaliphatic C₂ to C₂₄ monocarboxylic acids having monovalent C₁ to C₁₂ alcohols and the esters comprise at least a total of 8 C atoms and have a boiling point above 160 °C.

2. The PU adhesive according to claim 1, **characterized in that** it additionally contains conventional additives and auxiliaries selected from the group consisting of finely dispersed fillers, thixotropic agents, catalysts, resins, anti-ageing agents, stabilizers, dyes, adhesion promoters and wetting agents.

3. The PU adhesive according to one of claims 1 or 2, **characterized in that** aliphatic carboxylic acid esters from C₆ to C₂₂ carboxylic acids are used as the esters.

4. The PU adhesive according to one of claims 1 to 3, **characterized in that** the prepolymer is produced by reacting bifunctional or trifunctional polyether polyols or polyester polyols with an excess of diisocyanates.

5. The PU adhesive according to one of claims 1 to 4, **characterized in that** aromatic diisocyanates, in particular TDI or MDI and the isomers thereof, are used as the isocyanate.

6. The PU adhesive according to one of claims 1 to 5, **characterized in that** polyethylene glycols or polypropylene glycols are used as the polyol, in particular **in that** the molecular weight of the polyols is less than 1,500 g/mol.

7. The PU adhesive according to one of claims 1 to 6, **characterized in that** 3 to 15 wt.% of carboxylic acid esters are used.

8. The PU adhesive according to one of claims 1 to 7, **characterized in that** aliphatic carboxylic acids having 10 to 22 C atoms are used as the esters.

9. The PU adhesive according to one of claims 1 to 8, **characterized in that** the adhesive contains an adhesion promoter, in particular based on silane.

10. The PU adhesive according to one of claims 1 to 9, **characterized in that** the viscosity of the adhesive is below 75,000 mPas (DIN ISO 2555, 25 °C).

11. The PU adhesive according to one of claims 1 to 10, **characterized in that** the adhesive is free of fillers and pigments.

12. The PU adhesive according to one of claims 1 to 11, **characterized in that** the adhesive additionally contains 0.1 to 25 wt.% of additives.

13. The PU adhesive according to one of claims 1 to 12, **characterized in that** the two-component adhesive consists of an OH-functional component and an NCO-functional component, the NCO component containing a PU prepolymer together with corresponding carboxylic acid esters.

## Revendications

1. Colle polyuréthane à un composant ou deux composants réticulable à faible teneur en monomère contenant un prépolymère polyuréthane comportant des groupements NCO de masse moléculaire (MN) inférieure à 5 000 g/mol, déterminée par GPC, comportant une teneur en diisocyanates monomères inférieure à 0,5 % en poids, des esters d'acides monocarboxyliques ou dicarboxyliques en C₂ à C₂₄, aliphatiques ou cycloaliphatiques, saturés ou insaturés, et comportant des alcools monohydriques en C₁ à C₁₂ étant présents en une quantité de 0,5 à 30 % en poids, sur la base du prépolymère PU, et l'ester présentant au moins un total de 8 atomes de carbone et un point d'ébullition supérieur à 160 °C, les esters étant des esters d'acides monocarboxyliques en C₂ à C₂₄ saturés, aliphatiques ou cycloaliphatiques, comportant des alcools monohydriques en C₁ à C₁₂, et les esters présentant au moins un total de 8 atomes de carbone et un point d'ébullition supérieur à 160 °C.

2. Colle PU selon la revendication 1, **caractérisée en ce qu'**elle contient en outre des additifs et adjuvants conventionnels choisis dans le groupe constitué par les charges finement divisées, les agents thixotropes, les catalyseurs, les résines, les agents antivieillissement, les stabilisants, les colorants, les agents adhésifs et les agents mouillants.

3. Colle PU selon l'une des revendications 1 ou 2, **caractérisée en ce que** des esters d'acides carboxyliques aliphatiques d'acide carboxylique en C₆ à C₂₂ sont utilisés en tant qu'esters.

4. Colle PU selon l'une des revendications 1 à 3, **caractérisée en ce que** le prépolymère est produit par réaction de polyéther polyols ou de polyester polyols à deux ou trois fonctions avec un excès de diisocyanates.

5. Colle PU selon l'une des revendications 1 à 4, **caractérisée en ce que** des diisocyanates aromatiques sont utilisés en tant qu'isocyanate, en particulier du TDI ou du MDI et leurs isomères.

6. Colle PU selon l'une des revendications 1 à 5, **caractérisée en ce que** des polyéthylène glycols ou des polypropylène glycols sont utilisés en tant que polyol, en particulier **en ce que** le poids moléculaire des polyols est inférieur à 1 500 g/mol.

7. Colle PU selon l'une des revendications 1 à 6, **caractérisée par** l'utilisation de 3 à 15 % en poids des esters d'acide carboxylique.

8. Colle PU selon l'une des revendications 1 à 7, **caractérisée par** l'utilisation d'acides carboxyliques aliphatiques comportant 10 à 22 atomes de carbone en tant qu'esters.

9. Colle PU selon l'une des revendications 1 à 8, **caractérisée en ce que** la colle contient un agent adhésif, en particulier à base de silane.

10. Colle PU selon l'une des revendications 1 à 9, **caractérisée en ce que** la viscosité de la colle est inférieure à 75 000 mPa.s (DIN ISO 2555, 25 °C).

11. Colle PU selon l'une des revendications 1 à 10, **caractérisée en ce que** la colle est exempte de charges et de pigments.

12. Colle PU selon l'une des revendications 1 à 11, **caractérisée en ce que** la colle contient en outre entre 0,1 et 25 % en poids d'additifs.

13. Colle PU selon l'une des revendications 1 à 12, **caractérisée en ce que** la colle 2K est constituée d'un composant à fonction OH et d'un composant à fonction NCO, le composant NCO contenant un prépolymère PU conjointement avec des esters d'acide carboxylique correspondants.
